# EUROPEAN PATENT SPECIFICATION

(11) **EP 3 072 753 B1**
(45) Date of publication and mention of the grant of the patent: **24.10.2018**
(21) Application number: 15160597.9
(22) Date of filing: 24.03.2015
(51) Int. Cl.: B60R 21/235

(54) **An air-bag**
AIRBAG
AIRBAG

(43) Date of publication of application: 28.09.2016
(73) Proprietor: Autoliv Development AB, 447 83 Vårgårda (SE)
(72) Inventor: Johansson, Jack, 438 32 Landvetter (SE); Warm, Annika, SE-44734 Vargarda (SE)
(74) Representative: Beattie, Alex Thomas Stewart

(56) References cited:
- EP-A2- 1 574 404
- US-A1- 2008 084 053

## Description

The present invention relates to an air-bag, and in particular to an air-bag for use in a safety arrangement in a vehicle. The present invention also relates to a method of manufacturing an air-bag.

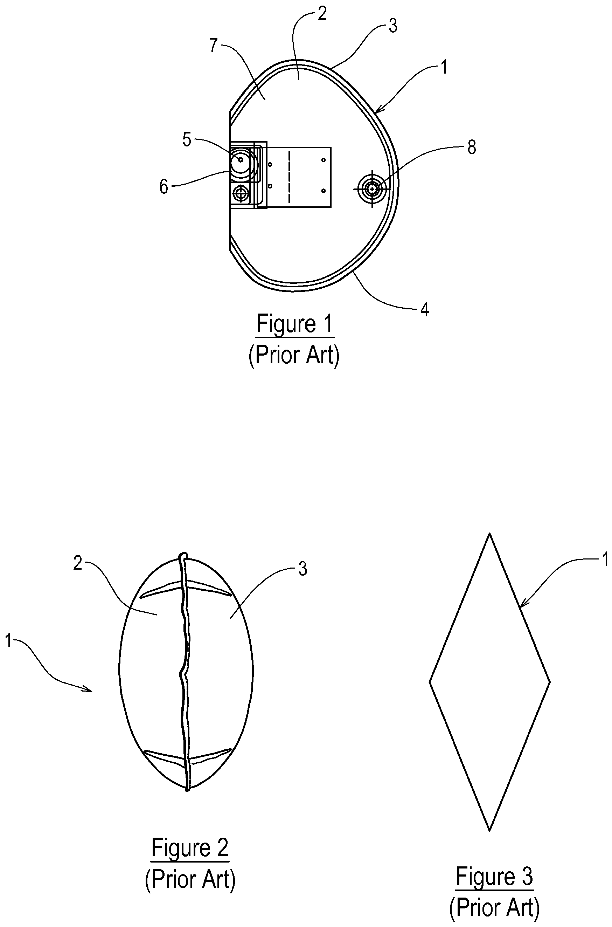

It is known to provide a side air-bag within a vehicle in order to protect one side of an occupant of the vehicle in the event that the vehicle is involved in a crash situation. A conventional side air-bag has a generally oval side profile. An example of a conventional side air-bag 1 is shown in figure 1 of the accompanying drawings.

The air-bag 1 comprises two superimposed layers 2, 3 (only one of which is visible in figure 1) which are attached to one another around their periphery by a stitching seam 4. One of the layers 2, 3 is provided with a reinforced region 5 which is positioned adjacent an inlet aperture 6. The inlet aperture 6 is configured to be connected to a source of gas, such as a pyrotechnic gas generator. One of the layers 2 is provided with a vent aperture 8 to permit controlled venting of gas from within the inflated air-bag 1 during a crash situation.

The air-bag 1 is configured to be inflated by gas to a thickness of approximately 100mm across a side protection face 7 of the air-bag 1. Once inflated, the cross-section of the air-bag 1 may be represented generally as a diamond shape, with the central portion being thicker than the rear and front portions of the air-bag 1, as shown in figures 2 and 3.

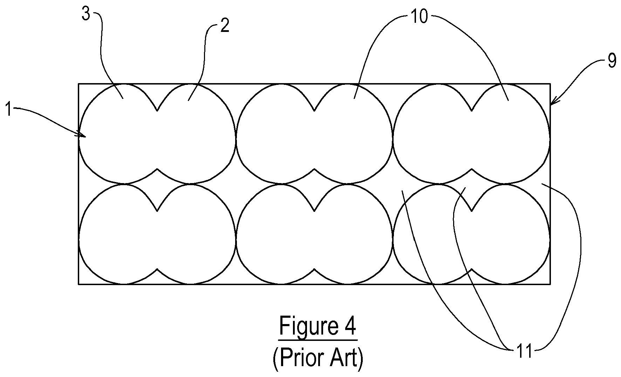

Referring now to figure 4 of the accompanying drawings, at an initial stage of a method of manufacturing the air-bag 1 the two layers 2, 3 are formed integrally with one another and cut from a large sheet of fabric 9. The integrally formed layers 2, 3 initially define a "butterfly" shape before the layers 2, 3 are folded and superimposed on one another to form the air-bag 1. A plurality of other identical "butterfly" shaped panels 10 are normally cut from the same large sheet of fabric 9 to be used to form other air-bags.

The panels of fabric 10 are positioned to be as close as possible to one another on the large sheet of fabric 9 in order to minimise the amount of fabric that is wasted when the panels 10 are cut from the fabric 9. Whilst this manufacturing technique helps to reduce the amount of wasted fabric, there are still fabric sections 11 between the panels 10 that are wasted when the panels 10 are cut from the fabric 9.

EP-A-1574404 describes a conventional air-bag structure and a method of manufacturing the same.

There is a need for an improved air-bag and an improved method of manufacturing an air-bag which minimises the amount of fabric that is wasted when the air-bag is manufactured.

The present invention seeks to provide an improved air-bag and an improved method of manufacturing an air-bag.

According to one aspect of the present invention, there is provided an air-bag as defined in claim 1 hereinafter.

According to another aspect of the present invention, there is provided a method as defined in claim 11 hereinafter.

Preferably, the first and second edges of the first layer are substantially perpendicular to one another and the third and fourth edges of the second layer are substantially perpendicular to one another.

Conveniently, the first and second layers are each substantially rectangular.

Advantageously, a portion of the second layer is cut away along a cut edge which extends from the third edge to the fourth edge of the second layer at substantially the angle A relative to the fourth edge, and wherein the cut edge is substantially parallel to the fold line.

Preferably, the angle A is substantially 45º.

Conveniently, the first and second layers are attached to one another by a single seam which extends at least partly around the reinforced part (28) and the chamber.

Advantageously, at least one of the first and second layers is provided with a vent aperture.

Preferably, at least one of the first and second layers is provided with an inlet aperture that enables gas to be injected into the chamber to inflate the chamber.

Conveniently, a gas generator is coupled to the inlet aperture so that gas generated by the gas generator is injected through the inlet aperture and into the chamber, wherein at least part of the gas generator is positioned adjacent to the reinforced part.

Advantageously, the superimposed first parts of the layers provide an interface to be mounted to at least one of a gas generator and a housing.

Preferably, the steps of providing the first and second layers comprise cutting the first and second layers from the same fabric portion.

Conveniently, the first and second layers are substantially rectangular.

Advantageously, the method further comprises providing the second layer with a cut edge which extends from the third edge to the fourth edge at substantially the angle A relative to the fourth edge, and positioning the cut edge substantially parallel to the fold line.

Preferably, the step of attaching the layers to one another comprises stitching the layers to one another along a single seam which extends at least partly around the periphery of the reinforced part and the chamber.

So that the present invention may be more readily understood, embodiments of the present invention will now be described, by way of example, with reference to the accompanying drawings, in which:
Figure 1 is a diagram showing a conventional side air-bag,
Figure 2 is a diagrammatic side view of the air-bag of figure 1 when the air-bag is inflated,
Figure 3 is a schematic diagram of the cross-section of the air-bag of figure 1 when the air-bag is inflated,
Figure 4 is a diagram showing a large sheet of fabric during an initial step of manufacturing the air-bag of figure 1,
Figure 5 is a diagram showing a first layer of an air-bag of an embodiment of the invention,
Figure 6 is a diagram showing a second layer of an air-bag of an embodiment of the invention,
Figure 7 is a diagram showing a sheet of fabric during an initial step of manufacturing an air-bag of an embodiment of the invention,
Figure 8 is a diagram showing the layers of the air-bag of figures 3 and 4 being attached to one another during an intermediate manufacturing step of an embodiment of the invention,
Figure 9 is a diagram showing an air-bag of an embodiment of the invention with the layers of the air-bag attached to one another,
Figure 10 is a schematic diagram illustrating the order of stitching for a seam which attaches the layers of an air-bag to one another in an embodiment of the invention,
Figure 11 is a diagram showing a side view of an air-bag of an embodiment of the invention when the air-bag is inflated, and
Figure 12 is a schematic diagram of the cross-section of the air-bag of figure 10 when the air-bag is inflated.

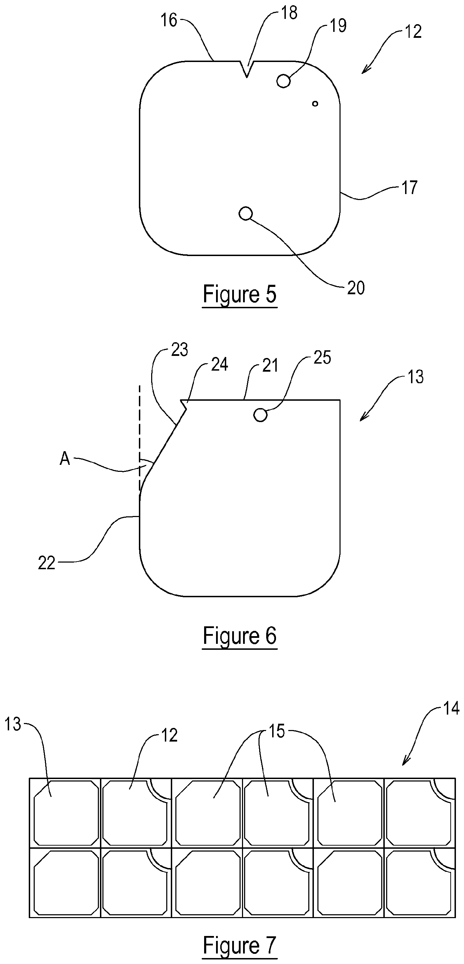

Referring now to figures 5 and 6 of the accompanying drawings, an air-bag of an embodiment of the invention comprises a first layer 12 and a second layer 13. Each of the layers 12, 13 is of a flexible woven fabric. The layers 12, 13 are discrete portions of fabric which are initially cut from a larger fabric portion 14, as shown in figure 7. Further fabric layers 15 are preferably also cut from the same fabric portion 14 to form other air-bags.

The layers 12, 13 are each rectangular or generally rectangular in shape, preferably with rounded corners. Each layer 12, 13 incorporates four straight edges which define the rectangular or generally rectangular shape. The rectangular or generally rectangular shape of the layers 12, 13 maximises the number of layers which may be cut from the section of fabric 14. This minimises the amount of fabric that is wasted during the manufacturing process since the rectangular or generally rectangular shape of the layers minimises the amount of fabric which is left after the layers have been cut from the fabric portion 14. The amount of wasted fabric is reduced significantly compared with a conventional "butterfly" air-bag such as the air-bag shown in figure 1. An air-bag of an embodiment of the invention therefore has less fabric usage per air-bag kit than a conventional "butterfly" air-bag kit.

The first layer 12 comprises a first edge 16 and a second edge 17 which are each perpendicular or generally perpendicular to one another. The first edge 16 is provided with a generally V-shaped notch 18 which extends from the first edge 16 into the body of the fabric of the first layer 12.

The first layer 12 is provided with a first inlet aperture 19 which is positioned in a corner section of the first layer 12 adjacent the corner of the first layer 12, where the first edge 16 meets the second edge 17.

The first layer 12 is provided with a vent aperture 20 which is positioned in a central portion of the body of fabric of the first layer 12. In further embodiments, the first layer 12 is provided with further vent apertures. In other embodiments, the first layer 12 is not provided with any vent apertures.

The second layer 13 comprises a third edge 21 and a fourth edge 22 which are each perpendicular or generally perpendicular to one another.

A portion of the second layer 13 is cut away along a cut edge 23 which extends from the third edge 21 to the fourth edge 22 of the second layer 13 at an angle A relative to the fourth edge 22. In one embodiment, the angle A is 45º or substantially 45º. The second layer 13 comprises a generally V-shaped projection 24 which extends outwardly from the end of the cut edge 23 at the point at which the cut edge 23 meets the third edge 21 of the second layer 13.

The second layer 13 is provided with a second inlet aperture 25 which is positioned adjacent the third edge 21 of the second layer 13.

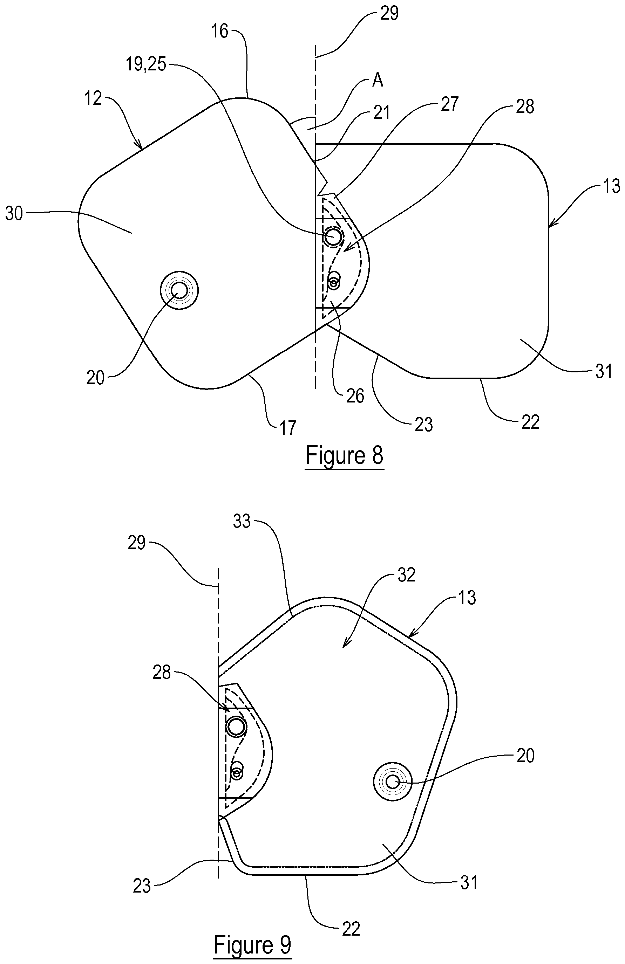

Referring now to figure 8 of the accompanying drawings, the air-bag is assembled by offsetting the first and second layers 12, 13 rotationally relative to one another such that the first edge 16 is at the same or substantially the same angle A relative to the third edge 21 as the angle A of the cut edge 23 of the second layer 13. A first part 26 of the second layer 13 is superimposed on a first part 27 of the first layer 12 to define a reinforced part 28. When the first parts 26, 27 of the first and second layers 12, 13 are superimposed on one another, the first and second inlet apertures 19, 25 of the respective first and second layers 12, 13 are aligned or substantially aligned with one another.

One edge of the V-shaped projection 24 of the second layer 13 is aligned or is substantially aligned with the second edge 17 of the first layer 12.

The first layer 12 is folded about a fold line 29 that that intersects the first edge 16 and which is at or is substantially at the angle A relative to the first edge 16 of the first layer 12 so that a second part 30 of the first layer 12 is superimposed on a second part 31 of the second layer 13 to define a chamber 32 therebetween, as shown in figure 9.

The first and second layers 12, 13 are attached to one another along a seam 33 which extends at least partly around the reinforced part 28 and the chamber 32. The seam 33 is preferably formed by stitching, but may alternatively be formed by another attachment formation, such as adhesive. In this embodiment, the seam 33 is a single continuous seam which extends at least partly around the periphery of the reinforced part 28 and the chamber 32.

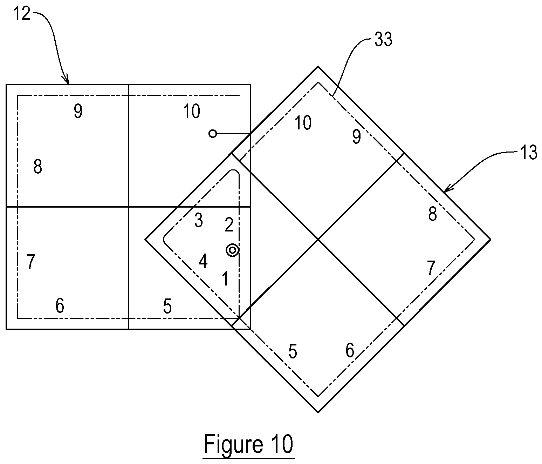

Figure 10 of the accompanying drawings shows numbers 1-10 which indicate the order in which the stitching is carried out to produce the single continuous seam 33 which attaches the first and second layers 12, 13 to one another. The single continuous seam reduces the cost of manufacturing the air-bag since the single seam connects the layers 12, 13 to one another in a single manufacturing step.

Once the layers 12, 13 of the air-bag are attached to one another, a source of gas, preferably in the form of a gas generator is coupled to the inlets 19, 25. The inlets 19, 25 enable gas generated by the gas generator to be injected through the inlets 19, 25 and into the chamber 32. The chamber 32 is thus inflated by gas from the gas generator.

In this embodiment, at least part of the gas generator is positioned adjacent to the reinforced part 28. The superimposed first parts 26, 27 of the layers 12, 13 that form the reinforced part 28 provide an interface which enables the air-bag to be connected to at least one of a gas generator and a housing. The reinforced part 28, which is formed by parts of the first and second layers 12, 13 removes or reduces the need to provide additional reinforcing layers in order to attach a gas generator or a housing to the air-bag. This further reduces the cost and complexity of the method of manufacturing the air-bag.

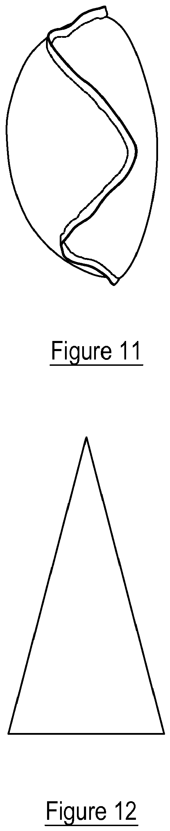

When the air-bag of an embodiment of the invention is inflated, the shape of the inflated air-bag has a front portion that is thicker than a rear portion. This shape is produced as a result of the construction of the air-bag from the first and second layers 12, 13 as described above. The configuration of the panels 12, 13 enables the air-bag to take on this shape without requiring an additional wedge-shaped portion of the air-bag to be provided in addition to the two layers 12, 13. This further reduces the amount of fabric required to manufacture the air-bag. The difference in the side profile of the inflated air-bag of an embodiment of the invention is readily apparent when comparing the cross-sectional schematic diagram of figure 11 with the cross-sectional schematic diagram of a conventional air-bag as shown in figure 2.

The air-bag of the embodiments of the invention described above is a side air-bag. However, in other embodiments, the air-bag is a different air-bag for use in a vehicle safety arrangement, such as a front or knee protection air-bag.

When used in this specification and the claims, the term "comprises" and "comprising" and variations thereof mean that specified features, steps or integers and included. The terms are not to be interpreted to exclude the presence of other features, steps or compounds.

## Claims

1. An air-bag for use in a vehicle, the air-bag comprising:
a first layer (12) having a first edge (16) and a second edge (17); and
a second layer (13) having a third edge (21) and a fourth edge (22), wherein the layers (12, 13) are offset rotationally relative to one another such that the first edge (16) is at an angle A relative to the third edge (21), and wherein a second part (30) of the first layer (12) is folded about a fold line (29) that intersects the first edge (16) and which is substantially at the angle A relative to the first edge (16) so that a second part (31) of the second layer (13) is superimposed on the second part (30) of the first layer (12) to define a chamber (32) therebetween, the layers (12, 13) being attached to one another along a seam which extends at least partly around a periphery of the chamber (32) so that the chamber (32) may be inflated by gas provided by a source of gas, **characterised in that**:
a first part (26) of the second layer (13) is superimposed on a first part (27) of the first layer (12) to define a reinforced part (28) and the superimposed parts (27, 27) of the first and second layers (12, 13) are attached to one another along a seam which extends at least partly around the reinforced part (28).

2. The air-bag of claim 1, wherein the first and second edges (16, 17) of the first layer (12) are substantially perpendicular to one another and the third and fourth edges (21, 22) of the second layer (13) are substantially perpendicular to one another.

3. The air-bag of claim 1 or claim 2, wherein the first and second layers (12, 13) are each substantially rectangular.

4. The air-bag of any one of the preceding claims, wherein a portion of the second layer (13) is cut away along a cut edge (23) which extends from the third edge (21) to the fourth edge (22) of the second layer (13) at substantially the angle A relative to the fourth edge (22), and wherein the cut edge (23) is substantially parallel to the fold line (29).

5. The air-bag of any one of the preceding claims, wherein the angle A is substantially 45º.

6. The air-bag of any one of the preceding claims, wherein the first and second layers (12, 13) are attached to one another by a single seam (33) which extends at least partly around the reinforced part (28) and the chamber (32).

7. The air-bag of any one of the preceding claims, wherein at least one of the first and second layers (12, 13) is provided with a vent aperture (20).

8. The air-bag of any one of the preceding claims, wherein at least one of the first and second layers (12, 13) is provided with an inlet aperture (19, 25) that enables gas to be injected into the chamber (32) to inflate the chamber (32).

9. The air-bag of claim 8, wherein a gas generator is coupled to the inlet aperture (19, 25) so that gas generated by the gas generator is injected through the inlet aperture (19, 25) and into the chamber (32), wherein at least part of the gas generator is positioned adjacent to the reinforced part (28).

10. The air-bag of any one of the preceding claims, wherein the superimposed first parts (26, 27) of the layers (12, 13) provide an interface to be mounted to at least one of a gas generator and a housing.

11. A method of manufacturing an air-bag according to any one of the preceding claims, the method comprising:
providing a first layer (12) having a first edge (16) and a second edge (17);
providing a second layer (13) having a third edge (21) and a fourth edge (22);
offsetting the layers (12, 13) rotationally relative to one another such that the first edge (16) is at an angle A relative to the third edge (21);
superimposing a first part (26) of the second layer (13) on a first part (27) of the first layer (12) to define a reinforced part (28);
folding a second part (30) of the first layer (12) about a fold line (29) that intersects the first edge (16) and which is substantially at the angle A relative to the first edge (16) and superimposing a second part (31) of the second layer (13) on the second part (30) of the first layer (12) to define a chamber (32) therebetween; **characterised by**
attaching the layers (12, 13) to one another along a seam which extends at least partly around the reinforced part (28) and along a seam which extends at least partly around the periphery of the chamber (32) so that the chamber (32) may be inflated by gas provided by a source of gas.

12. The method of claim 11, wherein the steps of providing the first and second layers (12, 13) comprise cutting the first and second layers (12, 13) from the same fabric portion (14).

13. The method of claim 11 or claim 12, wherein the first and second layers (12, 13) are substantially rectangular.

14. The method of any one of claims 11 to 13, wherein the method further comprises providing the second layer (13) with a cut edge (23) which extends from the third edge to the fourth edge at substantially the angle A relative to the fourth edge, and positioning the cut edge (23) substantially parallel to the fold line (29).

15. The method of any one of claims 11 to 14, wherein the step of attaching the layers (12, 13) to one another comprises stitching the layers (12, 13) to one another along a single seam (33) which extends at least partly around the periphery of the reinforced part (28) and the chamber (32).

## Patentansprüche

1. Airbag zur Verwendung in einem Fahrzeug, wobei der Airbag Folgendes umfasst:
eine erste Lage (12) mit einer ersten Kante (16) und einer zweiten Kante (17); und eine zweite Lage (13) mit einer dritten Kante (21) und einer vierten Kante (22), wobei die Lagen (12, 13) relativ zueinander in Drehrichtung so versetzt sind, dass die erste Kante (16) in einem Winkel A relativ zur dritten Kante (21) steht, und wobei ein zweiter Teil (30) der ersten Lage (12) um eine Faltlinie (29) gefaltet ist, die die erste Kante (16) schneidet und die im Wesentlichen im Winkel A relativ zu der ersten Kante (16) steht, so dass ein zweiter Teil (31) der zweiten Lage (13) dem zweiten Teil (30) der ersten Lage (12) überlagert ist, um dazwischen eine Kammer (32) zu definieren, wobei die Lagen (12, 13) entlang einer Naht aneinander befestigt sind, die sich zumindest teilweise um einen Außenumfang der Kammer (32) erstreckt, so dass die Kammer (32) durch von einer Gasquelle bereitgestelltes Gas aufgeblasen werden kann, **dadurch gekennzeichnet, dass**:
ein erster Teil (26) der zweiten Lage (13) einem ersten Teil (27) der ersten Lage (12) überlagert ist, um einen verstärkten Teil (28) zu definieren, und die übereinanderliegenden Teile (27, 27) der ersten und zweiten Lage (12, 13) entlang einer Naht aneinander befestigt sind, die sich zumindest teilweise um den verstärkten Teil (28) herum erstreckt.

2. Airbag nach Anspruch 1, wobei die erste und die zweite Kante (16, 17) der ersten Lage (12) im Wesentlichen senkrecht zueinander und die dritte und vierte Kante (21, 22) der zweiten Lage (13) im Wesentlichen senkrecht zueinander stehen.

3. Airbag nach Anspruch 1 oder Anspruch 2, wobei die erste und die zweite Lage (12, 13) jeweils im Wesentlichen rechteckig sind.

4. Airbag nach einem der vorangehenden Ansprüche, wobei ein Abschnitt der zweiten Lage (13) entlang einer Schnittkante (23), die sich von der dritten Kante (21) bis zur vierten Kante (22) der zweiten Lage (13) erstreckt, im Wesentlichen im Winkel A relativ zur vierten Kante (22) abgeschnitten ist, und wobei die Schnittkante (23) im Wesentlichen parallel zur Faltlinie (29) verläuft.

5. Airbag nach einem der vorangehenden Ansprüche, wobei der Winkel A im Wesentlichen 45° beträgt.

6. Airbag nach einem der vorangehenden Ansprüche, wobei die erste und die zweite Lage (12, 13) durch eine einzige Naht (33) aneinander befestigt sind, die sich zumindest teilweise um den verstärkten Teil (28) und die Kammer (32) erstreckt.

7. Airbag nach einem der vorangehenden Ansprüche, wobei mindestens eine aus erster und zweiter Lage (12, 13) mit einer Entlüftungsöffnung (20) versehen ist.

8. Airbag nach einem der vorangehenden Ansprüche, wobei mindestens eine aus erster und zweiter Lage (12, 13) mit einer Einlassöffnung (19, 25) versehen ist, die es ermöglicht, Gas in die Kammer (32) einzuspritzen, um die Kammer (32) aufzublasen.

9. Airbag nach Anspruch 8, wobei ein Gasgenerator mit der Einlassöffnung (19, 25) gekoppelt ist, so dass vom Gasgenerator erzeugtes Gas durch die Einlassöffnung (19, 25) und in die Kammer (32) eingespritzt wird, wobei zumindest ein Teil des Gasgenerators angrenzend an den verstärkten Teil (28) angeordnet ist.

10. Airbag nach einem der vorangehenden Ansprüche, wobei die übereinanderliegenden ersten Teile (26, 27) der Lagen (12, 13) eine Schnittstelle bilden, die an mindestens einem von einem Gasgenerator und einem Gehäuse anzubringen ist.

11. Verfahren zur Herstellung eines Airbags nach einem der vorangehenden Ansprüche, wobei das Verfahren umfasst:
Bereitstellen einer ersten Lage (12) mit einer ersten Kante (16) und einer zweiten Kante (17);
Bereitstellen einer zweiten Lage (13) mit einer dritten Kante (21) und einer vierten Kante (22);
Versetzen der Lagen (12, 13) in Drehrichtung relativ zueinander, so dass die erste Kante (16) in einem Winkel A relativ zur dritten Kante (21) steht;
Überlagern eines ersten Teils (26) der zweiten Lage (13) über einen ersten Teil (27) der ersten Lage (12), um einen verstärkten Teil (28) zu definieren;
Falten eines zweiten Teils (30) der ersten Lage (12) um eine Faltlinie (29), die die erste Kante (16) schneidet und die im Wesentlichen im Winkel A relativ zu der ersten Kante (16) steht, und Überlagern eines zweiten Teils (31) der zweiten Lage (13) auf über den zweiten Teil (30) der ersten Lage (12), um eine Kammer (32) dazwischen zu definieren; **gekennzeichnet durch**
Befestigen der Lagen (12, 13) aneinander entlang einer Naht, die sich zumindest teilweise um den verstärkten Teil (28) und entlang einer Naht erstreckt, die sich zumindest teilweise um den Außenumfang der Kammer (32) erstreckt, so dass die Kammer (32) durch Gas aufgeblasen werden kann, das von einer Gasquelle bereitgestellt wird.

12. Verfahren nach Anspruch 11, wobei die Schritte des Bereitstellens der ersten und der zweiten Lage (12, 13) das Abschneiden der ersten und der zweiten Lage (12, 13) vom gleichen Gewebeabschnitt (14) umfassen.

13. Verfahren nach Anspruch 11 oder Anspruch 12, wobei die erste und zweite Lage (12, 13) im Wesentlichen rechteckig sind.

14. Verfahren nach einem der Ansprüche 11 bis 13, wobei das Verfahren ferner das Versehen der zweiten Lage (13) mit einer Schnittkante (23), die sich von der dritten Kante zur vierten Kante im Wesentlichen im Winkel A relativ zur vierten Kante erstreckt, und das Positionieren der Schnittkante (23) im Wesentlichen parallel zur Faltlinie (29) umfasst.

15. Verfahren nach einem der Ansprüche 11 bis 14, wobei der Schritt des Befestigens der Lagen (12, 13) aneinander das Annähen der Lagen (12, 13) aneinander entlang einer einzelnen Naht (33) umfasst, die sich zumindest teilweise um den Außenumfang des verstärkten Teils (28) und der Kammer (32) erstreckt.

## Revendications

1. Coussin de sécurité gonflable destiné à être utilisé dans un véhicule, coussin de sécurité gonflable comprenant :
une première couche (12), présentant un premier bord (16) et un deuxième bord (17); et
une deuxième couche (13) présentant un troisième bord (21) et un quatrième bord (22),
dans lequel les couches (12, 13) sont décalées en rotation l'une par rapport à l'autre de sorte que le premier bord (16) est à un angle A par rapport au troisième bord (21) et dans lequel une deuxième partie (30) de la première couche (12) est pliée sur une ligne de pliage (29) qui croise le premier bord (16) et qui est pratiquement à l'angle A par rapport au premier bord (16) de manière à ce que la deuxième partie (31) de la deuxième couche (13) soit superposée sur la deuxième partie (30) de la première couche (12) pour définir une chambre (32) entre celles-ci, les couches (12, 13) étant fixées l'une à l'autre le long d'une couture qui s'étend au moins en partie autour de la périphérie de la chambre (32) de manière à ce que la chambre (32) puisse être gonflée par le gaz fourni par une source de gaz, **caractérisée en ce que** :
une première partie (26) de la deuxième couche (13) est superposée sur une première partie (27) de la première couche (12) pour définir une partie renforcée (28) et les parties superposées (27, 27) des première et deuxième couches (12, 13) sont fixées l'une à l'autre le long d'une couture qui s'étend au moins en partie autour de la partie renforcée (28).

2. Coussin de sécurité gonflable selon la revendication 1, dans lequel les premier et deuxième bords (16, 17) de la première couche (12) sont pratiquement perpendiculaires l'un à l'autre et les troisième et quatrième bords (21, 22) de la deuxième couche (13) sont pratiquement perpendiculaires l'un à l'autre.

3. Coussin de sécurité gonflable selon la revendication 1 ou la revendication 2, dans lequel les première et deuxième couches (12, 13) sont chacune pratiquement rectangulaires.

4. Coussin de sécurité gonflable selon l'une quelconque des revendications précédentes, dans lequel une partie de la deuxième couche (13) est coupée le long d'un bord coupé (23) qui s'étend depuis le troisième bord (21) vers le quatrième bord (22) de la deuxième couche (13) à pratiquement l'angle A par rapport au quatrième bord (22) et dans lequel le bord coupé (23) est pratiquement parallèle à la ligne de pliage (29).

5. Coussin de sécurité gonflable selon l'une quelconque des revendications précédentes, dans lequel l'angle A est pratiquement de 45°.

6. Coussin de sécurité gonflable selon l'une quelconque des revendications précédentes, dans lequel les première et deuxième couches (12, 13) sont fixées l'une à l'autre par une seule couture (33) qui s'étend au moins en partie autour de la partie renforcée (28) et de la chambre (32).

7. Coussin de sécurité gonflable selon l'une quelconque des revendications précédentes, dans lequel au moins une parmi les première et deuxième couches (12, 13) est pourvue d'une ouverture d'évent (20).

8. Coussin de sécurité gonflable selon l'une quelconque des revendications précédentes, dans lequel au moins une parmi les première et deuxième couches (12, 13) est pourvue d'une ouverture d'admission (19, 25) qui permet au gaz d'être injecté dans la chambre (32) pour gonfler la chambre (32).

9. Coussin de sécurité gonflable selon la revendication 8, dans lequel un générateur de gaz est accouplé à l'ouverture d'admission (19, 25) de manière à ce que le gaz généré par le générateur de gaz soit injecté à travers l'ouverture d'admission (19, 25) dans la chambre (32), dans lequel au moins une partie du générateur de gaz est positionné adjacent à la partie renforcée (28).

10. Coussin de sécurité gonflable selon l'une quelconque des revendications précédentes, dans lequel les premières parties superposées (26, 27) des couches (12, 13) fournissent une interface devant être montée sur au moins un parmi un générateur de gaz et un logement.

11. Procédé de fabrication d'un coussin de sécurité gonflable selon l'une quelconque des revendications précédentes, le procédé comprenant :
la fourniture d'une première couche (12) présentant un premier bord (16) et un deuxième bord (17) ;
la fourniture d'une deuxième couche (13) présentant un troisième bord (21) et un quatrième bord (22) ;
le décalage des couches (12, 13) en rotation les unes par rapport aux autres de sorte que le premier bord (16) est à un angle A par rapport au troisième bord (21);
la superposition d'une première partie (26) de la deuxième couche (13) sur une première partie (27) de la première couche (12) pour définir une partie renforcée (28) ;
le pliage d'une deuxième partie (30) de la première couche (12) sur une ligne de pliage (29) qui croise le premier bord (16) et qui est pratiquement à l'angle A par rapport au premier bord (16) et la superposition d'une deuxième partie (31) de la deuxième couche (13) sur la deuxième partie (30) de la première couche (12) pour définir une chambre (32) entre celles-ci, **caractérisé par** la fixation des couches (12, 13) l'une à l'autre le long d'une couture qui s'étend au moins en partie autour de la partie renforcée (28) et le long d'une couture qui s'étend au moins en partie à la périphérie de la chambre (32) de manière à ce que la chambre (32) puisse être gonflée par le gaz fourni par une source de gaz.

12. Procédé selon la revendication 11, dans laquelle les étapes de fourniture des première et deuxième couches (12, 13) comprennent la coupe des première et deuxième couches (12, 13) à partir de la même portion de tissu (14).

13. Procédé selon la revendication 11 ou la revendication 12, dans lequel les première et deuxième couches (12, 13) sont pratiquement rectangulaires.

14. Procédé selon l'une quelconque des revendications 11 à 13, dans lequel le procédé comprend en outre la fourniture d'une deuxième couche (13) comportant un bord coupé (23) qui s'étend depuis le troisième bord vers le quatrième bord à pratiquement l'angle A par rapport au quatrième bord et le positionnement du bord coupé (23) pratiquement parallèle à la ligne de pliage (29).

15. Procédé selon l'une quelconque des revendications 11 à 14, dans lequel l'étape de fixation des couches (12, 13) l'une à l'autre comporte la couture des couches (12, 13) l'une à l'autre le long d'une seule couture (33) qui s'étend au moins en partie à la périphérie de la partie renforcée (28) et de la chambre (32).
